# EUROPEAN PATENT SPECIFICATION

(11) **EP 4 132 029 B1**
(45) Date of publication and mention of the grant of the patent: **11.02.2026**
(21) Application number: 21776113.9
(22) Date of filing: 23.03.2021
(51) Int. Cl.: H04W 4/40, H04W 76/11, H04W 76/14, H04W 92/18, H04W 12/00

(54) **IDENTIFICATION INFORMATION UPDATE METHOD, TERMINAL AND NETWORK DEVICE**
VERFAHREN ZUR AKTUALISIERUNG VON IDENTIFIKATIONSINFORMATIONEN, ENDGERÄT UND NETZWERKVORRICHTUNG
PROCÉDÉ DE MISE À JOUR D'INFORMATIONS D'IDENTIFICATION, TERMINAL ET DISPOSITIF DE RÉSEAU

(30) Priority: 24.03.2020 CN 202010220980
(43) Date of publication of application: 08.02.2023
(73) Proprietor: Vivo Mobile Communication Co., Ltd., Dongguan, Guangdong 523863 (CN)
(72) Inventor: WANG, Wen, Dongguan, Guangdong 523863 (CN); KANG, Yanchao, Dongguan, Guangdong 523863 (CN); XIE, Zhenhua, Dongguan, Guangdong 523863 (CN)
(74) Representative: Chas. Hude A/S
(86) International application number: PCT/CN2021/082364
(87) International publication number: WO 2021/190497

(56) References cited:
- WO-A1-2016/131193
- CN-A- 105 165 045
- INTERDIGITAL: "TR 33.836 solution #4 update", vol. SA WG3, no. Wroclaw (Poland); 20190826 - 20190830, 18 August 2019 (2019-08-18), XP051776371, Retrieved from the Internet <URL:http://www.3gpp.org/ftp/tsg_sa/WG3_Security/TSGS3_96_Wroclaw/Docs/S3-192525.zip> [retrieved on 20190818]
- "3 Generation Partnership Project; Technical Specification Group Core Network and Terminals; Vehicle-to-Everything (V2X) services in 5G System (5GS); Protocol aspects; Stage 3 (Release 16)", no. V1.0.0, 2 December 2019 (2019-12-02), pages 1 - 32, XP051840650, Retrieved from the Internet <URL:ftp://ftp.3gpp.org/Specs/archive/24_series/24.587/24587-100.zip 24587-100.docx> [retrieved on 20191202]
- "3 Generation Partnership Project; Technical Specification Group Core Network and Terminals; Vehicle-to-Everything (V2X) services in 5G System (5GS); Protocol aspects; Stage 3 (Release 16)", 3GPP STANDARD; TECHNICAL SPECIFICATION; 3GPP TS 24.587, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.0.0, 2 December 2019 (2019-12-02), Mobile Competence Centre ; 650, route des Lucioles ; F-06921 Sophia-Antipolis Cedex ; France, pages 1 - 32, XP051840650

## Description

### TECHNICAL FIELD

Embodiments of the present invention relate to the field of communications technologies, and in particular, to an identifier information updating method, a terminal, and a network device.

### BACKGROUND

In a PC5 unicast connection establishment process, a first terminal used as an initiating end sends a sidelink establishment request message in a broadcast manner, where the sidelink establishment request message carries a source layer 2 identifier (source L2 ID) of the first terminal. When accepting establishment of a PCS communications link, a second terminal used as a receiving end replies to the first terminal with a sidelink accept message, where a destination layer 2 identifier (Destination L2 ID) used in the sidelink accept message is the source L2 ID of the first terminal.

Because the sidelink establishment request message of the first terminal is sent in the broadcast manner, the source L2 ID of the first terminal is directly exposed to other user equipment (User Equipment, UE) or a third-party device. This makes transmit-end UE having privatized configuration be at risk of tracking and recognition.

*S3-192525 (TR 33.836 solution #4)* discloses a method that the initiating UE sends newly generated identifiers to the peer UE via the already established unicast communication.

*3GPP TS 24587 V1.0.0* discloses a method in which a PC5 unicast link establishment procedure is initiated between the initiating UE and the target UE.

### SUMMARY

The invention is set out in the appended set of claims.

### BRIEF DESCRIPTION OF DRAWINGS

The accompanying drawings illustrated herein are provided to further understand the present application and form a part of the present application. The exemplary embodiments of the present application and the descriptions thereof are used to explain the present application and do not constitute an improper limitation on the present application. In the accompanying drawings:
FIG. 1 is a schematic flowchart of an identifier information updating method according to an embodiment of the present invention;
FIG. 2 is a schematic flowchart of an identifier information updating method according to another embodiment of the present invention;
FIG. 3 is a schematic flowchart of an identifier information updating method according to still another embodiment of the present invention;
FIG. 4 is a schematic flowchart of an identifier information updating method according to yet another embodiment of the present invention;
FIG. 5 is a schematic structural diagram of a terminal according to an embodiment of the present invention;
FIG. 6 is a schematic structural diagram of a terminal according to another embodiment of the present invention; and
FIG. 7 is a schematic structural diagram of a terminal according to still another embodiment of the present invention.

### DESCRIPTION OF EMBODIMENTS

To make the objectives, technical solutions, and advantages of this application clearer, the following clearly and completely describes the technical solutions of this application with reference to the specific embodiments of this application and the corresponding accompanying drawings. Apparently, the described embodiments are merely some rather than all of the embodiments of this application. The term "and/or" in the embodiments of this specification indicates at least one of the former item and the latter item.

It should be understood that the technical solutions in the embodiments of the present invention may be performed by various communications systems, such as a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS) or a worldwide interoperability for microwave access (Worldwide Interoperability for Microwave Access, WiMAX) communications system, a 5G system, a new radio (New Radio, NR) system, or a subsequent evolved communications system.

In the embodiments of the present invention, a terminal may include but is not limited to a mobile station (Mobile Station, MS), a mobile terminal (Mobile Terminal), a mobile telephone (Mobile Telephone), user equipment (User Equipment, UE), a handset (handset), portable equipment (portable equipment), a vehicle (vehicle), and the like. The terminal may communicate with one or more core networks by using a radio access network (Radio Access Network, RAN). For example, the terminal may be a mobile phone (or referred to as a "cellular" phone), or a computer having a wireless communication function; or the terminal may be a portable, pocket-sized, handheld, computer built-in, or in-vehicle mobile apparatus.

In the embodiments of the present invention, a network device is an apparatus that is deployed in the radio access network and that is used to provide a wireless communication function for the terminal. The network device may be a base station, and the base station may include various types of macro base stations, micro base stations, relay stations, access points, or the like. In systems using different radio access technologies, names of devices having a base station function may be different. For example, in an LTE network, the network device is referred to as an evolved NodeB (Evolved NodeB, eNB or eNodeB); and in a 3rd Generation (3rd Generation, 3G) network, the network device is referred to as a NodeB or a network device in the subsequent evolved communications system. However, the terms do not constitute a limitation.

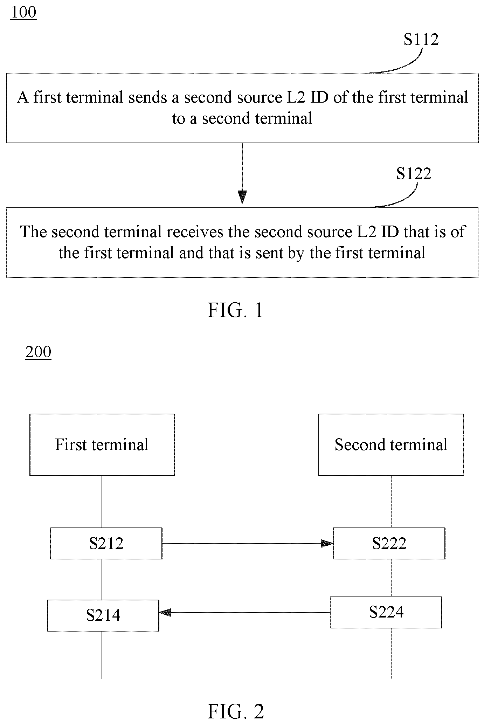

As shown in FIG. 1, an embodiment of the present invention provides an identifier information updating method 100. The method may be performed by a terminal device. In other words, the method may be performed by software or hardware installed on the terminal device. The method includes the following steps.

S112: A first terminal sends a second source L2 ID of the first terminal to a second terminal.

Before this step, in a PC5 unicast connection establishment process, the first terminal used as an initiating end sends a sidelink establishment request message in a broadcast manner, where the sidelink establishment request message carries a first source L2 ID of the first terminal. As a result, the first source L2 ID of the first terminal is directly exposed to other UE or a third-party device, which makes the first terminal be at risk of tracking and recognition.

In this step, the second source L2 ID is different from the first source L2 ID used in the sidelink establishment request message. In this way, a source L2 ID of the first terminal is updated.

In addition, the sidelink establishment request message may also be referred to as a direct communication request message or the like; the source L2 ID may also be referred to as an L2 ID or the like; and "first" and "second" are merely used for distinguishing but impose no actual limitation.

S122: The second terminal receives the second source L2 ID that is of the first terminal and that is sent by the first terminal.

The second source L2 ID is different from the first source L2 ID used in the sidelink establishment request message.

Therefore, according to the identifier information updating method provided in this embodiment of the present invention, a second source L2 ID of a first terminal is sent to a second terminal, where the second source L2 ID is different from a first source L2 ID used in a sidelink establishment request message, so that a source L2 ID of an initiating end of a PC5 unicast connection can be updated, to protect the initiating end of the PC5 unicast connection from being tracked and recognized.

As shown in FIG. 2, an embodiment of the present invention provides an identifier information updating method 200. The method may be performed by a terminal device. In other words, the method may be performed by software or hardware installed on the terminal device. The method includes the following steps.

S212: A first terminal sends a second source L2 ID of the first terminal to a second terminal.

Before this step, in a PC5 unicast connection establishment process, the first terminal used as an initiating end sends a sidelink establishment request message in a broadcast manner, and receives a sidelink authentication request message sent by the second terminal, where the sidelink establishment request message carries a first source L2 ID of the first terminal. As a result, the first source L2 ID of the first terminal is directly exposed to other UE or a third-party device, which makes the first terminal be at risk of tracking and recognition. Then, the first terminal sends a sidelink authentication response message to the second terminal, and receives a sidelink security mode command message sent by the second terminal.

In an implementation, in this step, the first terminal sends a sidelink security mode complete message to the second terminal, where the second source L2 ID is carried in the sidelink security mode complete message, and is different from the first source L2 ID used in the sidelink establishment request message. In this way, a source L2 ID of the first terminal is updated.

In an implementation, the sidelink security mode complete message may include an information element corresponding to the second source L2 ID. In other words, the information element corresponding to the second source L2 ID may be added to the sidelink security mode complete message. For example, an information element "L2 ID (L2 ID)" is added to content of the sidelink security mode complete message, where an existence form of the information element is "optional (optional)", a format of the information element is "type value (type value)", and a length of the information element is 24-bit (bit) or the like.

S222: The second terminal receives the second source L2 ID that is of the first terminal and that is sent by the first terminal.

The second terminal receives the sidelink security mode complete message sent by the first terminal, to receive the second source L2 ID of the first terminal.

S224: The second terminal updates, to the second source L2 ID, a destination L2 ID stored in a unicast link text, and sends a PC5 unicast link message based on the second source L2 ID.

In an implementation, the second terminal uses the second source L2 ID as a destination L2 ID when sending a sidelink establishment accept message to the first terminal. In an implementation, the sidelink establishment accept message carries the second source L2 ID. The sidelink establishment accept message may also be referred to as a direct communication accept message or the like.

S214: The first terminal receives the PC5 unicast link message.

In an implementation, the first terminal receives the sidelink establishment accept message sent by the second terminal, where a destination L2 ID used in the sidelink establishment accept message is the second source L2 ID. In this way, the first terminal and the second terminal complete a subsequent PC5 unicast link establishment process based on the second source L2 ID used after updating.

In the independent claims, a PC5 unicast link release process is initiated when a received sidelink establishment accept message does not use the second source L2 ID as a destination L2 ID. A sidelink release request message carries a cause value of releasing, where a cause indicated by the cause value of releasing is an identifier being not updated.

In still another implementation, when a received sidelink establishment accept message does not use the second source L2 ID as a destination L2 ID, a PC5 unicast link identifier update process is initiated, and the second source L2 ID is carried in a sidelink identifier update request message.

Therefore, according to the identifier information updating method provided in this embodiment of the present invention, a second source L2 ID of a first terminal is sent to a second terminal, where the second source L2 ID is different from a first source L2 ID used in a sidelink establishment request message, so that a source L2 ID of an initiating end of a PC5 unicast connection can be updated, to protect the initiating end of the PC5 unicast connection from being tracked and recognized.

According to the identifier information updating method provided in this embodiment of the present invention, a PC5 unicast link release process is initiated when a received sidelink establishment accept message does not use a second source L2 ID as a destination L2 ID, so that a PC5 unicast link can be released when a source L2 ID of an initiating end of a PC5 unicast connection is not updated, to protect the initiating end of the PC5 unicast connection from being tracked and recognized.

According to the identifier information updating method provided in this embodiment of the present invention, when a received sidelink establishment accept message does not use a second source L2 ID as a destination L2 ID, a PC5 unicast link identifier update process is initiated, and the second source L2 ID is carried in a sidelink identifier update request message, so that a source L2 ID of an initiating end of a PC5 unicast connection can be updated, to protect the initiating end of the PC5 unicast connection from being tracked and recognized.

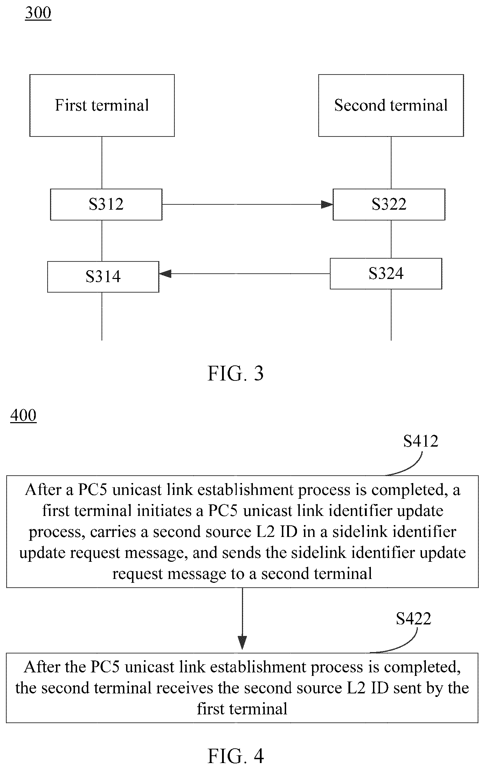

As shown in FIG. 3, an embodiment of the present invention provides an identifier information updating method 300. The method may be performed by a terminal device. In other words, the method may be performed by software or hardware installed on the terminal device. The method includes the following steps.

S312: A first terminal sends a second source L2 ID of the first terminal to a second terminal.

Before this step, in a PC5 unicast connection establishment process, the first terminal used as an initiating end sends a sidelink establishment request message in a broadcast manner, and receives a sidelink authentication request message sent by the second terminal, where the sidelink establishment request message carries a first source L2 ID of the first terminal. As a result, the first source L2 ID of the first terminal is directly exposed to other UE or a third-party device, which makes the first terminal be at risk of tracking and recognition.

In an implementation, in this step, the first terminal sends a sidelink authentication response message to the second terminal, where the second source L2 ID is carried in the sidelink authentication response message, and is different from the first source L2 ID used in the sidelink establishment request message. In this way, a source L2 ID of the first terminal is updated.

In an implementation, the sidelink authentication response message may include an information element corresponding to the second source L2 ID. In other words, the information element corresponding to the second source L2 ID may be added to the sidelink authentication response message. For example, an information element "L2 ID (L2 ID)" may be added, where an existence form of the information element is "optional (optional)", a format of the information element is "type value (type value)", and a length of the information element is 24-bit (bit) or the like.

S322: The second terminal receives the second source L2 ID that is of the first terminal and that is sent by the first terminal.

The second terminal receives the sidelink authentication response message sent by the first terminal, to receive the second source L2 ID of the first terminal.

S324: The second terminal updates, to the second source L2 ID, a destination L2 ID stored in a unicast link text, and sends a PC5 unicast link message based on the second source L2 ID.

In an implementation, the second terminal uses the second source L2 ID as a destination L2 ID when sending a sidelink security mode command message to the first terminal.

In an implementation, the sidelink security mode command message carries the second source L2 ID.

S314: The first terminal receives the PC5 unicast link message.

In an implementation, the first terminal receives the sidelink security mode command message sent by the second terminal, where a destination L2 ID used in the sidelink security mode command message is the second source L2 ID. Then, in an implementation, the first terminal sends a sidelink security mode complete message to the second terminal, and receives a sidelink establishment accept message sent by the second terminal. In this way, the first terminal and the second terminal complete a subsequent PC5 unicast link establishment process based on the second source L2 ID used after updating.

In another implementation, the first terminal terminates a PC5 unicast link establishment process when a received sidelink security mode command message does not use the second source L2 ID as a destination L2 ID.

Therefore, according to the identifier information updating method provided in this embodiment of the present invention, a second source L2 ID of a first terminal is sent to a second terminal, where the second source L2 ID is different from a first source L2 ID used in a sidelink establishment request message, so that a source L2 ID of an initiating end of a PC5 unicast connection can be updated, to protect the initiating end of the PC5 unicast connection from being tracked and recognized.

According to the identifier information updating method provided in this embodiment of the present invention, a second source L2 ID is carried in a sidelink security mode complete message or a sidelink authentication response message, and a PC5 unicast link establishment process is completed based on the second source L2 ID after the second source L2 ID is sent to a second terminal, so that a PC5 unicast link can be established, and an initiating end of a PC5 unicast connection can be prevented from being tracked and recognized.

According to the identifier information updating method provided in this embodiment of the present invention, a PC5 unicast link establishment process is terminated when a received sidelink security mode command message does not use a second source L2 ID as a destination L2 ID, so that when a source L2 ID of an initiating end of a PC5 unicast connection is not updated, the initiating end of the PC5 unicast connection can be protected from being tracked and recognized.

As shown in FIG. 4, an embodiment of the present invention provides an identifier information updating method 400. The method may be performed by a terminal device. In other words, the method may be performed by software or hardware installed on the terminal device. The method includes the following steps.

S412: After a PC5 unicast link establishment process is completed or a sidelink establishment accept message is received, a first terminal immediately initiates a PC5 unicast link identifier update process, carries a second source L2 ID in a sidelink identifier update request message, and sends the sidelink identifier update request message to a second terminal.

The PC5 unicast link establishment process may include the following steps: The first terminal used as an initiating end sends a sidelink establishment request message in a broadcast manner, and receives a sidelink authentication request message sent by the second terminal, where the sidelink establishment request message carries a first source L2 ID of the first terminal. The first terminal sends a sidelink authentication response message to the second terminal, and receives a sidelink security mode command message sent by the second terminal. The first terminal sends a sidelink security mode complete message to the second terminal, and receives a sidelink establishment accept message sent by the second terminal.

After receiving the sidelink establishment accept message of the second terminal, the first terminal immediately initiates the PC5 unicast link identifier update process, carries the second source L2 ID in the sidelink identifier update request message, and sends the sidelink identifier update request message to the second terminal. The second source L2 ID is different from the first source L2 ID used in the sidelink establishment request message. In this way, a source L2 ID of the first terminal is updated.

In an implementation, the sidelink identifier update request message includes an information element corresponding to the second source L2 ID. In other words, the information element corresponding to the second source L2 ID is written into the sidelink authentication response message. For example, an information element "L2 ID (L2 ID)" is written, where an existence form of the information element is "optional (optional)", a format of the information element is "type value (type value)", and a length of the information element is 24-bit (bit).

S422: After the PC5 unicast link establishment process is completed, the second terminal receives the second source L2 ID sent by the first terminal.

In an implementation, the second source L2 ID is carried in a sidelink identifier update request message.

Therefore, according to the identifier information updating method provided in this embodiment of the present invention, after a PC5 unicast link establishment process is completed, a PC5 unicast link identifier update process is initiated, a second source L2 ID is carried in a sidelink identifier update request message, and the sidelink identifier update request message is sent to a second terminal, so that a source L2 ID of an initiating end of a PC5 unicast connection can be updated, to protect the initiating end of the PC5 unicast connection from being tracked and recognized.

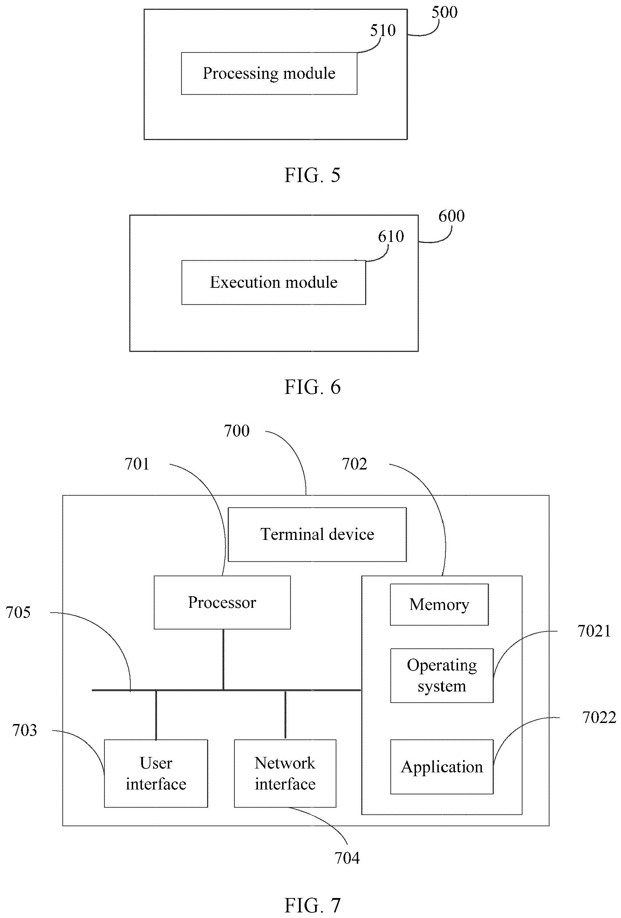

The identifier information updating method according to the embodiments of the present invention is described in detail above with reference to FIG. 1 to FIG. 4. The terminal according to the embodiments of the present invention is described in detail below with reference to FIG. 5.

FIG. 5 is a schematic structural diagram of a terminal according to an embodiment of the present invention. As shown in FIG. 5, the terminal 500 includes a processing module 510.

The processing module 510 is configured to send a second source L2 ID of a first terminal to a second terminal, where the second source L2 ID is different from a first source L2 ID used in a sidelink establishment request message.

In an implementation, the second source L2 ID is carried in a sidelink security mode complete message or a sidelink authentication response message. The processing module 510 is further configured to complete a PC5 unicast link establishment process based on the second source L2 ID after the second source L2 ID is sent to the second terminal.

In an implementation, the processing module 510 is further configured to receive a sidelink security mode command message or a sidelink establishment accept message sent by the second terminal, where a destination L2 ID used in the sidelink security mode command message or the sidelink establishment accept message is the second source L2 ID.

In an implementation, the sidelink security mode command message or the sidelink establishment accept message carries the second source L2 ID.

In an implementation, the sidelink security mode complete message or the sidelink authentication response message includes an information element corresponding to the second source L2 ID.

In an implementation, after sending the second source L2 ID to the second terminal, the processing module 510 is further configured to terminate a PC5 unicast link establishment process when a received sidelink security mode command message does not use the second source L2 ID as a destination L2 ID.

In an implementation, after sending the second source L2 ID to the second terminal, the processing module 510 is further configured to: initiate a PC5 unicast link release process when a received sidelink establishment accept message does not use the second source L2 ID as a destination L2 ID; or when a received sidelink establishment accept message does not use the second source L2 ID as a destination L2 ID, initiate a PC5 unicast link identifier update process, and carry the second source L2 ID in a sidelink identifier update request message.

In an implementation, the sidelink release request message carries a cause value of releasing, where a cause indicated by the cause value of releasing is an identifier being not updated.

In an implementation, the processing module 510 is configured to: after a PC5 unicast link establishment process is completed, initiate a PC5 unicast link identifier update process, carry the second source L2 ID in a sidelink identifier update request message, and send the sidelink identifier update request message to the second terminal.

For the terminal 500 according to this embodiment of the present invention, refer to the flows performed by the first terminal in the methods 100 to 400 according to the embodiments of the present invention. Furthermore, each unit/module in the terminal 500 and the above other operations and/or functions are used to implement corresponding flows performed by the first terminal in the methods 100 to 400, and the same or equivalent technical effect can be achieved. For brevity, details are not described herein again.

FIG. 6 is a schematic structural diagram of a network device according to an embodiment of the present invention. As shown in FIG. 6, the network device 600 includes an execution module 610.

The execution module 610 is configured to receive a second source L2 ID that is of a first terminal and that is sent by the first terminal, where the second source L2 ID is different from a first source L2 ID used in a sidelink establishment request message.

In an implementation, the second source L2 ID is carried in a sidelink security mode complete message or a sidelink authentication response message. The execution module 610 is further configured to complete a PC5 unicast link establishment process based on the second source L2 ID after receiving the second source L2 ID that is of the first terminal and that is sent by the first terminal.

In an implementation, the execution module 610 is configured to: update, to the second source L2 ID, a destination L2 ID stored in a unicast link text, and send a PC5 unicast link message based on the second source L2 ID.

In an implementation, the execution module 610 is configured to use the second source L2 ID as a destination L2 ID when sending a sidelink security mode command message or a sidelink establishment accept message to the first terminal.

In an implementation, the sidelink security mode command message or the sidelink establishment accept message carries the second source L2 ID.

In an implementation, the sidelink security mode complete message or the sidelink authentication response message includes an information element corresponding to the second source L2 ID.

In an implementation, the execution module 610 is configured to: after a PC5 unicast link establishment process is completed, receive the second source L2 ID sent by the first terminal.

In an implementation, the second source L2 ID is carried in a sidelink identifier update request message.

For the network device 600 according to this embodiment of the present invention, refer to the flows performed by the second terminal in the methods 100 to 400 according to the embodiments of the present invention. Furthermore, each unit/module in the network device 600 and the above other operations and/or functions are used to implement corresponding flows performed by the second terminal in the methods 100 to 400, and the same or equivalent technical effect can be achieved. For brevity, details are not described herein again.

FIG. 7 is a block diagram of a terminal according to another embodiment of the present invention. As shown in FIG. 7, the terminal 700 includes: at least one processor 701, a memory 702, at least one network interface 704, and a user interface 703. Various components of the terminal 700 are coupled by using a bus system 705. It may be understood that the bus system 705 is configured to implement connection and communication between these components. In addition to a data bus, the bus system 705 further includes a power bus, a control bus, and a status signal bus. However, for clear description, various buses are marked as the bus system 705 in FIG. 7.

The user interface 703 may include a display, a keyboard, a clicking device (for example, a mouse or a trackball (trackball)), a touch panel, a touchscreen, or the like.

It may be understood that the memory 702 in this embodiment of the present invention may be a volatile memory or a non-volatile memory, or may include both a volatile memory and a non-volatile memory. The nonvolatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), used as an external cache. Through exemplary but not restrictive description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 702 of the system and method described in the embodiments of the present invention is intended to include but is not limited to these and any other suitable type of memory.

In some implementations, the memory 702 stores the following elements: an executable module or a data structure, a subset thereof, or an extended set thereof: an operating system 7021 and an application program 7022.

The operating system 7021 includes various system programs, for example, a framework layer, a kernel library layer, and a driver layer, and is configured to implement various basic services and process hardware-based tasks. The application program 7022 includes various application programs, for example, a media player (Media Player) and a browser (Browser), and is used to implement various application services. A program for implementing the method in this embodiment of the present invention may be included in the application program 7022.

In this embodiment of the present invention, the terminal 700 further includes a computer program stored in the memory 702 and executable by the processor 701. When the computer program is executed by the processor 701, the steps performed by the first terminal or the second terminal in the methods 100 to 400 are implemented.

The method disclosed in the above embodiments of the present invention may be performed by the processor 701, or implemented by the processor 701. The processor 701 may be an integrated circuit chip, and has a signal processing capability. In an implementation process, the steps in the above methods may be completed by using an integrated logic circuit of hardware in the processor 701 or an instruction in a form of software. The processor 701 may be a general-purpose processor, a digital signal processor (Digital Signal Processor, DSP), an application-specific integrated circuit (Application-Specific Integrated Circuit, ASIC), a field programmable gate array (Field Programmable Gate Array, FPGA), another programmable logic device, a discrete gate, a transistor logic device, or a discrete hardware component. The processor can implement or execute the methods, steps, and logical block diagrams that are disclosed in the embodiments of the present invention. The general-purpose processor may be a microprocessor, any conventional processor, or the like. The steps of the method disclosed with reference to the embodiments of the present invention may be directly performed by a hardware decoding processor, or may be performed by using a combination of hardware and software modules in a decoding processor. The software module may be located in a computer-readable storage medium that is mature in the art, such as a random access memory, a flash memory, a read-only memory, a programmable read-only memory, an electrically erasable programmable memory, or a register. The computer-readable storage medium is located in the memory 702. The processor 701 reads information in the memory 702 and completes the steps in the above method in combination with hardware of the processor. Specifically, the computer-readable storage medium stores a computer program. When the computer program is executed by the processor 701, the steps performed by the first terminal or the second terminal in the methods 100 to 400 are implemented.

It may be understood that the embodiments described in the embodiments of the present invention may be implemented by hardware, software, firmware, middleware, microcode, or a combination thereof. For implementation with hardware, the processing unit may be implemented in one or more application-specific integrated circuits (Application Specific Integrated Circuits, ASIC), a digital signal processor (Digital Signal Processor, DSP), a digital signal processing device (DSP Device, DSPD), a programmable logic device (Programmable Logic Device, PLD), a field-programmable gate array (Field-Programmable Gate Array, FPGA), a general-purpose processor, a controller, a micro-controller, a microprocessor, another electronic unit for implementing the functions of the present application, or a combination thereof.

For implementation with software, the technology described in the embodiments of the present invention may be implemented by modules (for example, processes or functions) that perform the functions described in the embodiments of the present invention. Software code may be stored in the memory and executed by the processor. The memory may be implemented in or outside the processor.

The terminal 700 can implement each process implemented by the terminal in the above embodiments, and the same or equivalent technical effect can be achieved. To avoid repetition, details are not described herein again.

An embodiment of the present invention further provides a computer-readable storage medium. The computer-readable storage medium stores a computer program. When the computer program is executed by a processor, the steps performed by the first terminal or the second terminal in the above method embodiments 100 to 400 are implemented, and the same technical effect can be achieved. To avoid repetition, details are not described herein again. The computer-readable storage medium is, for example, a read-only memory (Read-Only Memory, ROM for short), a random access memory (Random Access Memory, RAM for short), a magnetic disk, or an optical disk.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. Without more restrictions, an element defined by a phrase "including a ......" does not exclude presence of other identical elements in the process, method, article, or apparatus that includes the very element.

By means of the above descriptions of the embodiments, a person skilled in the art may clearly understand that the method in the above embodiments may be implemented by software in addition to a necessary universal hardware platform. Certainly, the method in the above embodiments may also be implemented by hardware. However, in many cases, the former is a preferred embodiment. Based on such an understanding, the technical solutions of the present invention essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of the present invention.

In this application, the second terminal is not the subject-matter of protection.

In this application, "the PC5 unicast link identifier update process" is not the subject-matter of protection.

## Claims

1. An identifier information updating method performed by a first terminal, comprising:
sending (S112) a second source layer 2 identifier, L2 ID of the first terminal to a second terminal, wherein the second source L2 ID is different from a first source L2 ID used in a sidelink establishment request message, wherein the second source L2 ID is carried in a sidelink security mode complete message or a sidelink authentication response message;
the method is **characterized in that**:
after the sending (S112) the second source L2 ID to the second terminal, the method further comprises:
initiating a PC5 unicast link release process when a received sidelink establishment accept message does not use the second source L2 ID as a destination L2 ID;
wherein a sidelink release request message carries a cause value of releasing, wherein a cause indicated by the cause value of releasing is an identifier being not updated.

2. The method according to claim 1, wherein after the sending a second source L2 ID to a second terminal, the method further comprises:
completing a PC5 unicast link establishment process based on the second source L2 ID.

3. The method according to claim 2, wherein the completing a PC5 unicast link establishment process based on the second source L2 ID comprises:
receiving a sidelink security mode command message or a sidelink establishment accept message sent by the second terminal, wherein a destination layer 2 identifier, L2 ID used in the sidelink security mode command message or the sidelink establishment accept message is the second source L2 ID.

4. The method according to claim 3, wherein the sidelink security mode command message or the sidelink establishment accept message carries the second source L2 ID, or
wherein the sidelink security mode complete message or the sidelink authentication response message comprises an information element corresponding to the second source L2 ID.

5. The method according to claim 1, wherein after the sending a second source L2 ID to the second terminal, the method further comprises:
terminating a PC5 unicast link establishment process when a received sidelink security mode command message does not use the second source L2 ID as a destination L2 ID.

6. A terminal (700), comprising:
a processor (701); and
a memory (702) storing a computer program that is executable by the processor, wherein the computer program, when executed by the processor (701), performs the steps of the identifier information updating method according to any one of claims 1 to 5.

7. A computer-readable storage medium, storing a computer program, wherein the computer program, when executed by a processor of a first terminal, performs the steps of the identifier information updating method according to any one of claims 1 to 5.

## Patentansprüche

1. Ein Verfahren zum Aktualisieren von Identifikationsinformationen, das von einem ersten Endgerät durchgeführt wird und Folgendes umfasst:
Senden (S112) einer zweiten Quellschicht-2-Identifikation, L2-ID, des ersten Endgeräts an ein zweites Endgerät, wobei sich die zweite Quell-L2-ID von einer ersten Quell-L2-ID unterscheidet, die in einer Seitenverbindungsaufbauanforderungsnachricht verwendet wird, wobei die zweite Quell-L2-ID in einer Seitenverbindungssicherheitsmodusabschlussnachricht oder einer Seitenverbindungsauthentifizierungsantwortnachricht übertragen wird;
wobei das Verfahren **dadurch gekennzeichnet ist, dass**
nach dem Senden (S112) der zweiten Quell-L2-ID an das zweite Endgerät das Verfahren ferner umfasst:
das Initiieren eines PC5 Unicast-Verbindungsfreigabeprozesses, wenn eine empfangene Seitenverbindungsaufbauakzeptanznachricht die zweite Quell-L2-ID nicht als Ziel-L2-ID verwendet;
wobei eine Seitenverbindungsfreigabeanforderungsnachricht einen Ursachenwert zur Freigabe enthält, wobei eine durch den Ursachenwert zur Freigabe angegebene Ursache ein nicht aktualisierter Identifikator ist.

2. Das Verfahren nach Anspruch 1, wobei nach dem Senden einer zweiten Quell-L2-ID an ein zweites Endgerät das Verfahren ferner umfasst:
Abschließen eines PC5-Unicast-Verbindungsaufbauprozesses basierend auf der zweiten Quell-L2-ID.

3. Das Verfahren nach Anspruch 2, wobei das Abschließen eines PC5-Unicast-Verbindungsaufbauprozesses basierend auf der zweiten Quell-L2-ID umfasst:
Empfangen einer Seitenverbindungssicherheitsmodusbefehlsnachricht oder einer Seitenverbindungsaufbauakzeptanznachricht, die von dem zweiten Endgerät gesendet wird, wobei eine Zielschicht-2-Identifikation, L2-ID, die in der Seitenverbindungssicherheitsmodusbefehlsnachricht oder der Seitenverbindungsaufbauakzeptanznachricht verwendet wird, die zweite Quell-L2-ID ist.

4. Das Verfahren nach Anspruch 3, wobei die
Seitenverbindungssicherheitsmodusbefehlsnachricht oder die Seitenverbindungsaufbauakzeptanznachricht die zweite Quell-L2-ID überträgt, oder
wobei die Seitenverbindungssicherheitsmodusabschlussnachricht oder die Seitenverbindungsauthentifizierungsantwortnachricht ein Informationselement umfasst, das der zweiten Quell-L2-ID entspricht.

5. Das Verfahren nach Anspruch 1, wobei das Verfahren nach dem Senden einer zweiten Quell-L2-ID an das zweite Endgerät ferner umfasst:
Beenden eines PC5-Unicast-Verbindungsaufbauprozesses, wenn eine empfangene Seitenverbindungssicherheitsmodusbefehlsnachricht die zweite Quell-L2-ID nicht als Ziel-L2-ID verwendet.

6. Ein Endgerät (700), umfassend:
einen Prozessor (701); und
einen Speicher (702), der ein vom Prozessor ausführbares Computerprogramm speichert, wobei das Computerprogramm, wenn es vom Prozessor (701) ausgeführt wird, die Schritte des Identifikationsinformations-Aktualisierungsverfahrens gemäß einem der Ansprüche 1 bis 5 ausführt.

7. Computerlesbares Speichermedium, das ein Computerprogramm speichert, wobei das Computerprogramm, wenn es von einem Prozessor eines ersten Terminals ausgeführt wird, die Schritte des Verfahrens zum Aktualisieren von Identifikationsinformationen gemäß einem der Ansprüche 1 bis 5 ausführt.

## Revendications

1. Procédé de mise à jour d'informations d'identification effectué par un premier terminal, comprenant :
l'envoi (S112) d'un deuxième identifiant de couche 2 source, ID L2, du premier terminal à un deuxième terminal, dans lequel le deuxième ID L2 source est différent d'un premier ID L2 source utilisé dans un message de demande d'établissement de liaison latérale, dans lequel le deuxième ID L2 source est transporté dans un message complet de mode de sécurité de liaison latérale ou dans un message de réponse d'authentification de liaison latérale ;
le procédé est **caractérisé en ce que** :
après l'envoi (S112) du deuxième ID L2 source au deuxième terminal, le procédé comprend en outre :
l'engagement d'un processus d'établissement de liaison de monodiffusion PC5 si un message d'acceptation d'établissement de liaison latérale n'utilise pas le deuxième ID L2 source comme une destination ID L2 ;
dans lequel un message de demande de libération de la liaison latérale transporte une valeur de cause de libération, où une cause indiquée par la valeur de cause de libération est un identifiant non mis à jour.

2. Procédé selon la revendication 1, dans lequel, après l'envoi du deuxième ID L2 source à un deuxième terminal, le procédé comprend en outre :
l'achèvement d'un processus d'établissement de liaison de monodiffusion PC5 basé sur le deuxième ID L2 source.

3. Procédé selon la revendication 2, dans lequel l'achèvement d'un processus d'établissement de liaison de monodiffusion PC5 basé sur le deuxième **ID** L2 source comprend :
la réception d'un message de commande de mode de sécurité de liaison latérale ou d'un message d'acceptation d'établissement de liaison latérale envoyé par le deuxième terminal, où l'identifiant de couche 2 destination, ID L2, utilisé dans le message de commande de mode de sécurité de liaison latérale ou dans le message d'acceptation d'établissement de liaison latérale est le deuxième **ID** L2 source.

4. Procédé selon la revendication 3, dans lequel le message de commande de mode de sécurité de liaison latérale ou le message d'acceptation d'établissement de liaison latérale transporte le deuxième ID L2 source, ou
dans lequel le message complet de mode de sécurité de liaison latérale ou le message de réponse d'authentification de liaison latérale comprend un élément d'information correspondant au deuxième ID L2 source.

5. Procédé selon la revendication 1, dans lequel, après l'envoi du deuxième ID L2 source au deuxième terminal, le procédé comprend en outre :
l'achèvement d'un processus d'établissement de liaison de monodiffusion PC5 si un message de commande de mode de sécurité de liaison latérale n'utilise pas le deuxième ID L2 source comme une destination ID L2.

6. Terminal (700) comprenant :
un processeur (701) ; et
une mémoire (702) stockant un programme informatique exécutable par le processeur, dans lequel le programme informatique, quand il est exécuté par le processeur (701), effectue les étapes du procédé de mise à jour d'informations d'identification selon l'une quelconque des revendications 1 à 5.

7. Support de stockage lisible par un ordinateur stockant un programme informatique, dans lequel le programme informatique, quand il est exécuté par un processeur d'un premier terminal, effectue les étapes du procédé de mise à jour d'informations d'identification selon l'une quelconque des revendications 1 à 5.
